Europäisches Patentamt

European Patent Office

Office européen des brevets

(19)

(11)  **EP 1 002 423 B1**

(12)  **EUROPÄISCHE PATENTSCHRIFT**

| | |
|---|---|
| (45) Veröffentlichungstag und Bekanntmachung des Hinweises auf die Patenterteilung: **23.01.2002  Patentblatt 2002/04** | (51) Int Cl.[7]: **H04N 5/14** |
| (21) Anmeldenummer: **97938905.3** | (86) Internationale Anmeldenummer: **PCT/EP97/04452** |
| (22) Anmeldetag: **14.08.1997** | (87) Internationale Veröffentlichungsnummer: **WO 99/09736 (25.02.1999 Gazette 1999/08)** |

(54) **VERFAHREN UND VORRICHTUNG ZUM ERFASSEN EINER VERÄNDERUNG ZWISCHEN PIXELSIGNALEN AUS ZEITLICH AUFEINANDERFOLGENDEN PIXELSIGNALEN**

METHOD AND DEVICE FOR DETECTING A CHANGE BETWEEN PIXEL SIGNALS WHICH CHRONOLOGICALLY FOLLOW ONE ANOTHER

PROCEDE ET DISPOSITIF PERMETTANT DE DETECTER UNE MODIFICATION ENTRE DES SIGNAUX DE PIXELS QUI SE SUIVENT LES UNS LES AUTRES DANS LE TEMPS

(84) Benannte Vertragsstaaten:
**DE FR GB IT**

(43) Veröffentlichungstag der Anmeldung:
**24.05.2000  Patentblatt 2000/21**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
 • **SCHANZ, Michael**
 **D-46147 Oberhausen (DE)**
 • **PARK, Su-Birm**
 **D-44791 Bochum (DE)**
 • **TEUNER, Andreas**
 **D-45144 Essen (DE)**
 • **SCHWARZ, Markus**
 **D-47249 Duisburg (DE)**

 • **HOSTICKA, Bedrich**
 **D-47058 Duisburg (DE)**

(74) Vertreter: **Schoppe, Fritz, Dipl.-Ing. et al Patentanwälte Schoppe, Zimmermann, Stöckeler & Zinkler, Postfach 71 08 67 81458 München (DE)**

(56) Entgegenhaltungen:
 **EP-A- 0 465 375          EP-A- 0 763 933**

 • **SIMONI A ET AL: "A SINGLE-CHIP OPTICAL SENSOR WITH ANALOG MEMORY FOR MOTION DETECTION" 1.Juli 1995 , IEEE JOURNAL OF SOLID-STATE CIRCUITS, VOL. 30, NR. 7, PAGE(S) 800 - 805 XP000523431 siehe Seite 800, Absatz I; Abbildungen 1,2 siehe Seite 801, Absatz III - Seite 803; Abbildungen 1,2,4**

**Beschreibung**

Die vorliegende Erfindung bezieht sich auf ein Verfahren und auf eine Vorrichtung zum Erfassen einer Veränderung zwischen Pixelsignalen aus zeitlich aufeinanderfolgenden Pixelsignalen, und insbesondere auf ein Verfahren und auf eine Vorrichtung zum Erfassen bewegter Objekte in Bildfolgen.

Bildsensorelemente und die dazugehörige Elektronik stellen bei unterschiedlicher Anordnung, z.B. als eindimensionales Array (Einzelsensoren, Zeilen) oder als zweidimensionales Array, photoempfindliche integrierte Schaltkreise (IC) dar und sind beispielsweise als integrierte Bildsensoren in der MOS-Technologie gebildet. Als Bildsensorelemente können alle photoempfindlichen Bildsensoren eingesetzt werden, wobei die Bildsensorelemente aus der CMOS-Technologie aufgrund der Integrierbarkeit von Photosensoren und der dazugehörigen Elektronik einen erheblichen Vorteil aufweisen. In der CMOS-Technologie sind die Photodiode, der parasitäre, bipolare Phototransistor, das Photogate und der photoempfindliche MOSFET (MOS-Feldeffekttransistor) als Photosensoren bekannt. Die Auslese bzw. das Auslesen der aus der CMOS-Technologie bekannten Bildsensorelemente kann hierbei durch eine integrierte Elektronik durchgeführt werden.

Die Entwicklung intelligenter Bildsensorelemente hat dazu geführt, daß Bildverarbeitungsalgorithmen ebenfalls in die Bildsensorelemente mitintegriert werden. Durch die Mitintegration von Bildverarbeitungsalgorithmen wird eine komplexe Signalanalyse der ausgelesenen Bildinformation mit dem damit verbundenen Rechenaufwand im Bildsensorelement vorweg durchgeführt, und eine aufwendige, klassische Bildverarbeitung wird dadurch überflüssig. Die Bandbreite des Signals der Bildsensorelemente wird durch die Integration erheblich gesenkt, wodurch die Echtzeitfähigkeit eines integrierten Bildverarbeitungssystems erhöht wird. Die implementierten Bildverarbeitungsalgorithmen bestimmen die Anwendungsgebiete des integrierten Bildverarbeitungssystems. Sie werden durch die Schaltungstechnik der jeweiligen Technologie begrenzt.

Aus dem Stand der Technik ist die Verwendung verschiedener Bildsensorelemente in integrierter MOS-Technologie und die integrierte Elektronik zum Auslesen der Helligkeitswerte der Bildsensorelemente bekannt. Bekannte Bildsensorelemente umfassen entweder ein einzelnes Pixel oder eine Mehrzahl von Pixeln, die in Arrays angeordnet sind und beim Einfallen von Strahlung, wie beispielsweise Licht, ein Pixelsignal erzeugen, welches z.B. den Helligkeitswert eines Pixels oder einer Mehrzahl von Pixeln angibt. Bei einer mehrdimensionalen Anordnung der einzelnen Pixels spricht man in der Regel von einem Bild.

Aus dem Stand der Technik ist ferner die Verknüpfung von Bildsensorelementen zu sogenannten Bildsensornetzen, die Integration einfachster Algorithmen, z.B. der Differenzbildung Zweier aufeinanderfolgender Pixelsignale oder -werte, sowie die Schwellwertbildung bekannt.

Die aus dem Stand der Technik bekannten Verfahren und Vorrichtungen zum Erfassen bewegter Objekte in aufeinanderfolgenden Bildern weisen jedoch mehrere Nachteile auf. Die Differenzbildung von zwei aufeinanderfolgenden Pixelsignalen oder Helligkeitswerten, wobei diese im mehrdimensionalen Bereich Bilder sind, ist ein Algorithmus, der zwar einerseits einfach zu integrieren ist, eine hohe Ortsauflösung besitzt und einen geringen Mehraufwand der zu integrierenden Hardware darstellt, aber andererseits nur die Bewegung zwischen zwei Pixel- bzw. Bildsignalen aus zeitlich aufeinanderfolgenden Pixelsignalen bzw. Bildern darstellt, so daß kleine Bewegungen nicht detektiert werden können. Ein weiterer Nachteil bei der Differenzbildung sind die sogenannten Artefakte, die durch unterschiedliche Mechanismen erzeugt werden. Ursache solcher Artefakte können z.B. Beleuchtungsveränderungen und Rauschen bei der Bildaufnahme sein, z.B. ein zeitliches Rauschen der Bildsensoren, ein Rauschen des A/D-Wandlers (Analog/Digital-Wandler) und der anderen Schaltungselemente, die örtlich begrenzte, große Differenzwerte bilden. Diese Artefakte können dann fälschlicherweise als Bewegung erfaßt bzw. detektiert werden.

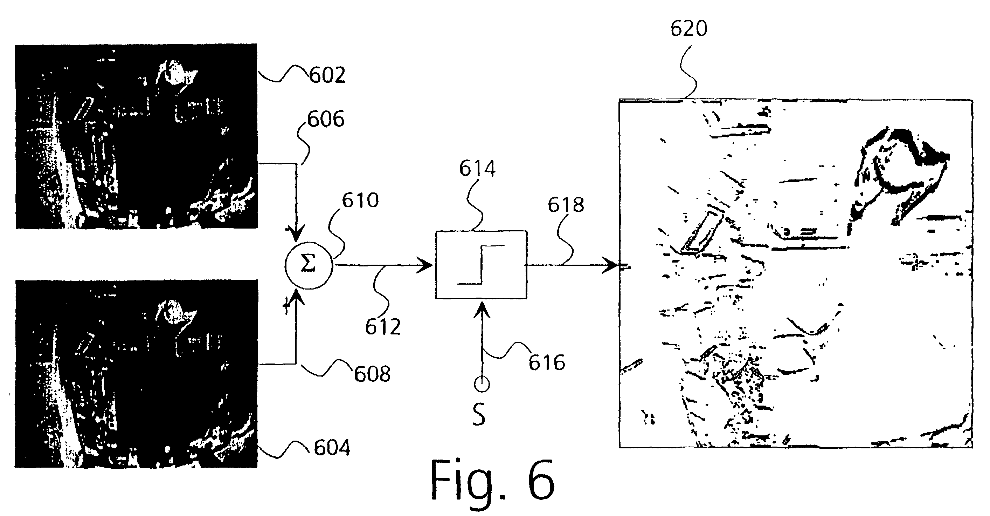

Ein Beispiel einer solchen fehlerhaften Erfassung ist anhand der Fig. 6 dargestellt. In Fig. 6 ist schematisch ein Algorithmus gemäß dem Stand der Technik dargestellt, bei dem ein erstes Bild 602 und ein zweites Bild 604, genauer gesagt Signale, die diese darstellen, über entsprechende Leitungen 606 und 608 einem Differenzbilder 610 zugeführt werden. Das erste Bild 602 ist hierbei das aktuell erfaßte Bild und das Bild 604 ist das im vorhergehenden Abtastvorgang erfaßte Bild. Die Bilder 602 und 604 zeigen beispielhaft eine perspektivische Abbildung eines Arbeitsraums, in dem sich eine Person (oben rechts in den Bildern) befindet, deren Bewegung zu erfassen ist. Wie es durch das Plus- bzw. Minus-Zeichen an dem Differenzbilder 610 angedeutet ist, wird zwischen dem ersten Bild 602 und dem zweiten Bild 604 eine Differenz gebildet, so daß sich auf der Ausgangsleitung 612 des Differenzbilders 610 ein Signal ergibt, welches die Differenz zwischen dem ersten Bild 602 und dem zweiten Bild 604 darstellt. Das Signal 612 wird in einen Schwellwertbilder 614 eingegeben, welchem über eine Leitung 616 ein Schwellwert S zugeführt wird. Auf der Ausgangsleitung 618 des Schwellwertbilders 614 liegt dann ein binäres Ausgangssignal an, welches sich aufgrund des aus dem Stand der Technik bekannten Differenzbildalgorithmus ergibt. Das binäre Differenzbild ist in seiner Gesamtheit mit dem Bezugszeichen 620 versehen. Eine Bewegung der Person ist im binären Bild 620 oben rechts zu erkennen, die Konturen der Person sind gegenüber den übrigen Gegenständen in dem Raum hervorgehoben.

Die EP 0 465 375 A2 beschreibt ein Bildverarbeitungsverfahren zum Erfassen beweglicher Objekte, bei dem ein Referenzsignal durch jeweils drei aufeinanderfolgende Bildrahmen gebildet wird, die in entsprechenden Rahmenspeichern abgelegt werden. Ein aktuell erfaßter Bildrahmen wird mit einem Signal verglichen, das durch drei zeitlich vorhergehende Bildrahmen gebildet wurde.

Die EP 0 763 933 A2 beschäftigt sich mit einem Verfahren zum Erfassen einer Bewegung in einem Videosignal, wobei jedoch kein zeitrekrusives Referenzsignal gebildet wird, das aufgrund von dem erfaßten Pixel vorhergehenden Pixeln bestimmt wird. Tatsächlich werden nur zeitlich aufeinanderfolgende Abtastwerte miteinander verglichen, wobei der Vergleich durch Differenzbildung von zwei ausgewählten Abtastwerten erzeugt wird, und dann festgestellt wird, ob diese größer als ein vorbestimmter Schwellenwert ist, der mit einem vorbestimmten Faktor multipliziert ist.

Ausgehend von diesem Stand der Technik liegt der vorliegenden Erfindung die Aufgabe zugrunde, ein Verfahren und eine Vorrichtung zum Erfassen einer Veränderung zwischen Pixelsignalen aus zeitlich aufeinanderfolgenden Pixelsignalen zu schaffen, mittels dem Bewegungen robuster und auch kleine Bewegungen erfaßt werden können, und bei dem das Auftreten von Artefakten vermieden wird.

Diese Aufgabe wird durch ein Verfahren gemäß dem Patentanspruch 1 sowie durch eine Vorrichtung gemäß dem Patentanspruch 7 gelöst.

Gemäß einem bevorzugten Ausführungsbeispiel der vorliegenden Erfindung erfolgt die Erzeugung des Referenzsignals durch eine zeitrekursive Berechnung.

Bevorzugte Weiterbildungen der vorliegenden Erfindung sind in den Unteransprüchen definiert.

Nachfolgend werden anhand der beiliegenden Zeichnungen bevorzugte Ausführungsbeispiele der vorliegenden Erfindung näher beschrieben. Es zeigen:

Fig. 1 eine schematische Darstellung des Ergebnisses der Anwendung des erfindungsgemäßen Verfahrens gemäß einem ersten Ausführungsbeispiels;

Fig. 2 ein Blockschaltbild, welches das Verfahren gemäß der vorliegenden Erfindung näher darstellt;

Fig. 3 eine schematische Darstellung der erfindungsgemäßen Vorrichtung gemäß einem Ausführungsbeispiel;

Fig. 4 eine detaillierte Darstellung eines weiteren Ausführungsbeispiels der erfindungsgemäßen Vorrichtung;

Fig. 5 ein Taktdiagramm der in Fig. 4 dargestellten Schalter; und

Fig. 6 eine schematische Darstellung eines Differenzbildalgorithmus aus dem Stand der Technik und des sich ergebenden Differenzbildes.

In der nachfolgenden Beschreibung der bevorzugten Ausführungsbeispiele wird hinsichtlich der zu verarbeitenden Signale auf sogenannte Bildsignale Bezug genommen. Es wird darauf hingewiesen, daß die vorliegende Erfindung nicht auf solche Bildsignale beschränkt ist, sondern daß auch die Erfassung der Signale von einzelnen Pixeln (im nachfolgende als Pixelsignale bezeichnet) durch die vorliegende Erfindung ermöglicht wird.

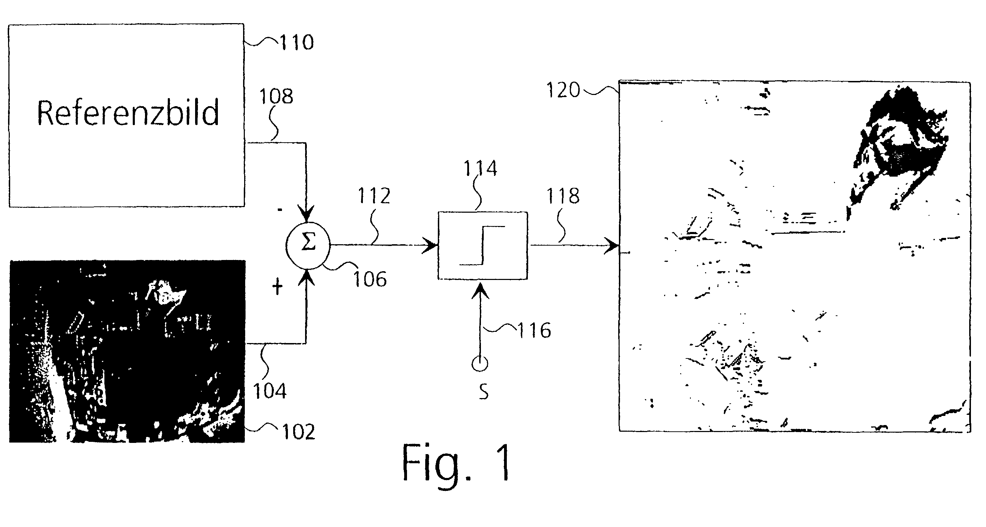

Anhand der Fig. 1 wird nachfolgend das erfindungsgemäße Verfahren näher beschrieben. Ein aktuelles Bild 102, welches wie in Fig. 6 eine perspektivische Abbildung eines Arbeitsraums zeigt, in dem sich eine Person (oben rechts in dem Bild) befindet, deren Bewegung zu erfassen ist, wird auf herkömmliche Art und Weise, beispielsweise durch einen Photodetektor oder ein anderes strahlungsempfindliches Sensorbauelement, erfaßt und ein Signal, welches das aktuelle Bild 102 darstellt, liegt auf der Leitung 104 an. Das auf der Leitung 104 anliegende Signal kann anstelle des dargestellten aktuellen Bildes 102 auch ein Signal sein, welches ein aktuelles Pixel darstellt, so daß in diesem Fall von einem Pixelsignal gesprochen wird. Abhängig davon, welche Art von Sensorelementen verwendet wird, handelt es sich bei dem auf Leitung 104 anliegenden Signal um ein Bildsignal oder ein Pixelsignal. Bei einem Sensorelement, welches die Auslesung einzelner Pixel ermöglicht oder auch nur ein Pixel darstellt, liegt ein Pixelsignal auf Leitung 104 an, wohingegen bei einem Sensorelement, welches eine mehrdimensionale Darstellung ermöglicht, ein Bildsignal auf der Leitung 104 anliegt. Die Leitung 104 ist mit einem Plus-Eingang eines Differenzbilders 106 verbunden. Ein Minus-Eingang des Differenzbilders 106 ist mit einer Leitung 108 verbunden, auf welcher Signale liegen, welche ein Referenzbild 110 bzw. ein Referenzpixelsignal darstellen. Auf der Leitung 108 liegt somit ein Referenzsignal an, welches dem Differenzbilder zugeführt wird. Der Differenzbilder 106 bildet zwischen dem auf der Leitung 104 vorhandenen Bildsignal und dem auf der Leitung 108 vorhandenen Referenzsignal ein Differenzsignal, welches auf der Leitung 112 anliegt und ein Differenzbild darstellt. Die Leitung 112 ist mit einem Eingang eines Schwellwertbilders 114 verbunden, welcher über einen weiteren Eingang und eine Leitung 116 einen Schwellwert S empfängt. Am Ausgang des Schwellwertbilders 114 liegt auf der Leitung 118 ein Signal an, welches ein binäres Differenzbild 120 repräsentiert, und aus dem eine Bewegung zwischen den zwei Bildsignalen ohne die Beeinflussung von Artefakten und mit der Möglichkeit der Erfassung kleiner Bewegungen erkennbar ist. Das Referenzsignal wird gemäß der vorliegenden Erfindung aus zumindest zwei, dem erfaßten Bild- bzw. Pixelsignal vorhergehenden Bild- bzw. Pixelsignalen erzeugt.

Wie aus einem Vergleich der binären Differenzbilder 620 und 120 in Fig. 6 und 1 zu erkennen ist, wird eine Bewegung der Person (oben rechts im binären Bild) gemäß der vorliegenden Erfindung robuster erfaßt, wie aus den deutlicheren Konturen der sich bewegenden Person und den geringeren Konturen der übrigen Gegenständen in dem Raum im binären Bild 120 zu erkennen ist.

Gemäß einem bevorzugten Ausführungsbeispiel der vorliegenden Erfindung wird zur Verbesserung des aus dem Stand der Technik bekannten, herkömmlichen Differenzbildalgorithmus ein Algorithmus verwendet, der das Referenzsignal bzw. den Referenzwert zeitrekursiv für jedes Pixel- bzw. Bildsensorelement berechnet. Dies bedeutet, daß in dem Referenzsignal bzw. -wert alle zeitlich davorliegenden Helligkeitswerte des Bildsensorelements, welche im folgenden auch als Bildsensorwerte bezeichnet werden, mit einer Gewichtung gespeichert sind. Durch diese zeitliche Rekursion können die oben beschriebenen Artefakte unterdrückt werden, und Bewegungen können hervorgehoben werden, wie sich aus einem Vergleich der Fig. 1 und 6 ergibt.

Ein Vorteil der vorliegenden Erfindung besteht darin, daß das erfindungsgemäße Verfahren als Algorithmus in das Bildsensorelement integriert werden kann, so daß zusätzlich das zeitliche Rauschen bezüglich der Bildaufnahme verringert wird, da die Bildverarbeitung und die Digitalisierung bereits vor dem Auslesen des Sensorelements erfolgen. Ferner ist das binäre Bildsensorsignal im Vergleich zum analogen Bildsensorsignal gegenüber Störeinflüssen wesentlich unempfindlicher.

Die Wandlung des analogen Bildsensorsignals in ein binäres Signal reduziert die zur Übertragung notwendige Bandbreite, so daß es naheliegt, die binären Bildsensorwerte in Echtzeit auszulesen. Eine anschließende Analyse der binären Bilder (Bewegungsbilder) kann mit Hilfe einfacher Hardware und Algorithmen je nach Anforderung erfolgen, so daß die Bewegung einzelner Objekte in Echtzeit verfolgt und gespeichert werden kann.

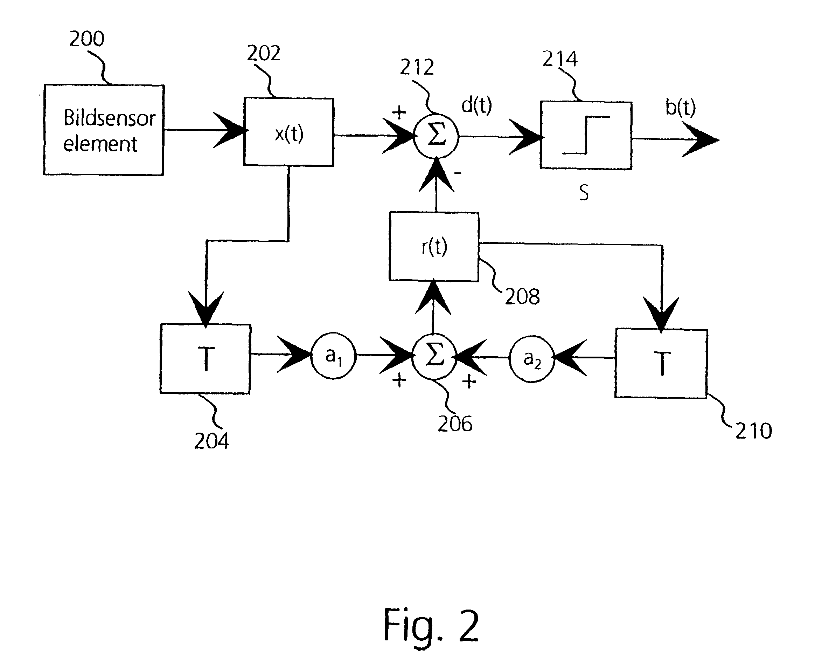

Nachfolgend wird anhand der Fig. 2 ein Blockdiagramm beschrieben, welches ein Ausführungsbeispiel des erfindungsgemäßen Verfahrens näher darstellt.

Ein Bildsensorelement 200 erfaßt ein Pixel oder ein Bild und erzeugt ein dem erfaßten Bild bzw. Pixel entsprechendes Signal, welches als aktueller Bildsensorwert x(t) bezeichnet wird, wie dies durch den Block 202 dargestellt ist. Der Block 202 ist mit einem Block 204 verbunden, welcher den aktuellen Bildsensorwert für eine Ausleseperiode T, welche das Reziproke der Ausleserate darstellt, enthält. Das Ergebnis aus dem Block 204 wird mittels eines ersten Gewichtungskoeffizienten $a_1$ gewichtet und einem Summierungsknoten 206 zugeführt. Im Block 208 ist der Referenzwert dargestellt, welcher gemäß dem Ausführungsbeispiel ein sogenannter zeitrekursiver Referenzwert r(t) ist. Der Block 208 ist mit dem Block 210 verbunden, welcher den Referenzwert für die Abtastperiode T erzeugt. Der so erzeugte Referenzwert wird mittels eines zweiten Gewichtungskoeffizienten $a_2$ gewichtet und ebenfalls dem Summierungsknoten 206 zugeführt, welcher das Ergebnis der Summe dem Block 208 bereitstellt. Der Block 202 und der Block 208 sind mit einem Knoten 212 verbunden, welcher die Differenz zwischen den aus den Blöcken 202 und 208 ausgegebenen Werten, x(t) und r(t), bildet, um so den Differenzwert d(t) zu erzeugen. Der Differenzwert d(t) wird in einen Schwellwertbilder 214 eingegeben, und am Ausgang des Schwellwertbilders 214 liegt das binäre Signal b(t) an.

Das Verfahren, wie es gemäß dem Blockdiagramm in Fig. 2 beschrieben wurde, erzeugt die anhand der nachfolgenden Gleichungen dargestellten Signale für bestimmte Abtastzeitwerte. Die Werte für n sind anhand des Zeitstrahl näher erläutert, in dem $M_u$ als der Abtastzeitpunkt eines Bildes an einer unteren Grenze des Erfassungsvorgangs bezeichnet ist, also als ein Zeitpunkt, zu dem ein erstes Bild erzeugt wurde, und in dem $M_o$ als der Abtastzeitpunkt eines Bildes an einer oberen Grenze des Erfassungsvorgangs bezeichnet ist, also als ein Zeitpunkt, zu dem ein letztes Bild erzeugt werden soll.

$$b(n \cdot T) = \begin{cases} 1 \ \text{für} \ d(n \cdot T) \geq S \\ 0 \ \text{sonst} \end{cases} \quad \text{mit} \ n \in \{M_u + 1, .., 1 .., M_o\} \quad (1)$$

$$d(n \cdot T) = x(n \cdot T) - a_1 \cdot \sum_{i=1}^{M_u} a_2^{i-1} \cdot x((n-i) \cdot T) \quad (2)$$

$$a_1 + a_2 = 1 \qquad\qquad (3)$$

Mit:

x(t) ... aktueller Bildsensorwert,
r(t) ... zeitrekursiver Referenzwert,
d(t) ... Differenzwert,
b(t) ... Binärsignal,
S ...... Schwellwert,
T ..... 1/Ausleserate,
t ..... Zeit.

Es wird darauf hingewiesen, daß die Bedingung 3 in jedem Fall erfüllt sein muß.

Die anhand der Fig. 2 dargestellte rekursive Berechnung des Referenzwertes stellt eine Tiefpassfilterung erster Ordnung dar, und die Differenzbildung zwischen dem aktuellen Bildsensorwert und dem zeitrekursiven Referenzwert stellt eine Hochpassfilterung dar. Die Kombination kann somit als Band-pass bezeichnet werden, dessen Eckfrequenzen über die Gewichtungskoeffizienten $a_1$, $a_2$ und die Ausleserate T der Pixel bzw. Bilder eingestellt werden kann. Über die Ausleserate kann eine Adaption des Referenzwertes an die aktuellen Bildsensorwerte eingestellt werden. Je höher die Ausleserate ist, desto schneller wird der Referenzwert adaptiert. Die Koeffizienten $a_1$, $a_2$ bestimmen die Gewichtung des Referenzwertes und des aktuellen Bildsensorwertes. Über diese Koeffizienten kann die Adaptionsgeschwindigkeit des Referenzwertes während einer Rekursion bestimmt werden.

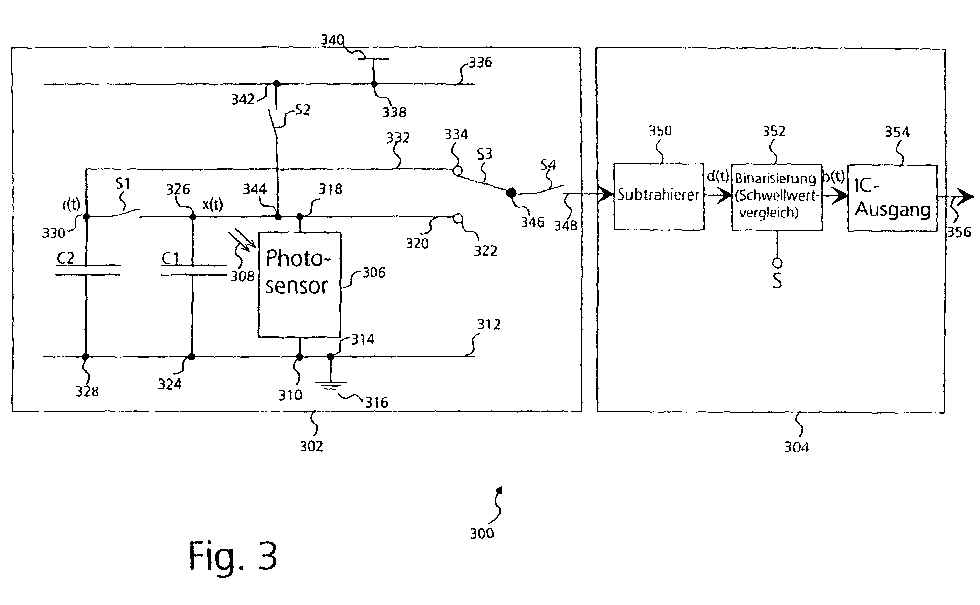

Ein erstes Ausführungsbeispiel der erfindungsgemäßen Vorrichtung wird nachfolgend anhand der Fig. 3, welche eine schematische Darstellung der erfindungsgemäßen Vorrichtung darstellt, näher erläutert.

Die Vorrichtung ist in Fig. 3 in ihrer Gesamtheit mit dem Bezugszeichen 300 versehen und umfaßt ein Bildsensorelement 302 sowie eine Ausleseschaltung 304. Ein Teil des erfindungsgemäßen Verfahrens findet in dem integrierten Bildsensorelement 302 eines Arrays statt, während der andere Teil während des Auslesens, also beim Zugriff einer beispielsweise mitintegrierten peripheren Schaltung auf das Bildsensorelement 302 erfolgt.

Das Bildsensorelement 302 umfaßt einen Photosensor 306, welcher gegenüber einer einfallenden Strahlung empfindlich ist, wie dies durch die Pfeile 308 schematisch dargestellt ist. Der Photosensor ist über einen ersten Knoten 310 mit einer ersten Leitung 312 verbunden, die über einen zweiten Knoten 314 mit Masse 316 verbunden ist. Der Photosensor 306 ist über einen dritten Knoten 318 mit einer zweiten Leitung 320 verbunden, welche einen Anschluß 322 aufweist. Ein erster Kondensator C1 ist parallel zu dem Photosensor 306 geschaltet und über einen vierten Knoten 324 mit der Leitung 312 und über einen fünften Knoten 326 mit der Leitung 320 verbunden. Ein zweiter Kondensator C2 ist über einen sechsten Knoten 328 mit der Leitung 312 verbunden und ist an seinem anderen Ende mit einem siebten Knoten 330 verbunden. Zwischen dem fünften Knoten 326 und dem siebten Knoten 330 ist in der Leitung 320 ein Schalter S1 angeordnet, über welchen der fünfte Knoten 326 und der siebte Knoten 330 verbindbar sind. Der siebte Knoten 330 ist mit einer dritten Leitung 332 verbunden, welche einen Anschluß 334 aufweist. Das Bildsensorelement 302 umfaßt ferner eine vierte Leitung 336, die über einen achten Knoten 338 mit einem Versorgungsanschluß 340 verbunden ist. Zwischen einem neunten Knoten 342 auf der Leitung 336 und einem zehnten Knoten auf der Leitung 320 ist ein zweiter Schalter S2 vorgesehen, über den die Leitung 320 mit dem Versorgungsanschluß 340 verbindbar ist. Ein dritter Schalter S3 ist vorgesehen, um einen elften Knoten 346 mit dem Anschluß 334 der Leitung 332 oder mit dem Anschluß 322 der Leitung 320 zu verbinden. Ein Ausgang 348 des Bildsensorelements ist über einen vierten Schalter S4 mit dem elften Knoten 346 verbindbar.

Die Ausleseschaltung 304 weist einen Subtrahierer 350 auf, dessen Eingang mit dem Ausgang 348 des Bildsensorelements 302 verbunden ist. Am Ausgang des Subtrahierers liegt das Differenzsignal d(t) an, und wird in einen Schwellwertbilder 352 eingegeben, welcher an einem weiteren Anschluß einen vorbestimmten Schwellwert S empfängt. Am Ausgang des Schwellwertbilders liegt das binäre Signal b(t) an, und wird an einen IC-Ausgang 354, z. B. einen Ausgangstreiber, angelegt, dessen Ausgang mit dem Ausgang 356 der Ausleseschaltung verbunden ist.

Im Bildsensorelement 302 findet die Aquisition des Bildsensorwertes x(t) (siehe Fig. 3) sowie die Erzeugung und Speicherung des Referenzwertes r(t) statt. Der Schalter S4 stellt einen Auswahlschalter für das Bildsensorelement 302 dar und ist beim Zugriff auf dieses Bildsensorelement 302 ständig geschlossen, d.h. durchgeschaltet. Zu Beginn einer Bildaquisition ist der Schalter S2 kurzfristig geschlossen. Dadurch wird das Potential des zehnten Knotens 344 für x(t) z.B. auf eine positive Versorgungsspannung $U_{DD}$ angehoben und somit zurückgesetzt. Das Rücksetzpotential 340 muß nicht zwingend zu $U_{DD}$ gewählt werden, sondern es kann auch frei wählbar von außen angelegt werden. Anschließend wird der Schalter S2 geöffnet und das Potential des zehnten Knotens 344 für x(t) auf dem Kondensator C1 wird über den vom Photosensor 306 erzeugten Photostrom proportional zur eingestrahlten Lichtleistung herabgesetzt. Dieser Vorgang dauert eine festgelegte Zeit, die im Nachfolgenden als Integrationszeit bezeichnet wird. Der Photosensor 306 kann z.B. eine Photodiode, ein bipolarer Phototransistor oder ein photoempfindlicher MOSFET sein. Der Kondensator C1 kann z.B durch eine Kapazität der Folge von Leiter-Isolator-Halbleiter, z.B. Polysilizium-$SiO_2$-Si, oder die Kapazität der Raumladungszone einer Diode gebildet sein. Das Potential auf dem Kondensator C2, welches den vorausgegangenen Referenzwert r(t-T) darstellt, wird über den Schalter S3 in der in Fig. 3 dargestellten Stellung ausgelesen und gespeichert, um dann vom Subtrahierer 350 mit dem Signal x(t) verrechnet zu werden. Anschließend wird der Schalter S3 umgeschaltet, um den Anschluß 322 der Leitung 320 mit dem elften Knoten 346 zu verbinden. Das Potential, welches dem aktuellen Bildsensorwert x(t) entspricht, wird dadurch aus dem Bildsensorelement 302 ausgelesen. Anschließend wird der Schalter S1 geschlossen, d.h. der fünfte Knoten 326 und der siebte Knoten 330 werden verbunden, um so den aktuellen Referenzwert r(t) zu bilden, indem sich die gespeicherte Ladung über den geschlossenen Schalter S1 auf beide Kondensatoren C1 und C2 verteilt. Das Potential, welches sich dann auf dem Kondensator C2 einstellt und den aktuellen Referenzwert r(t) repräsentiert, entspricht:

$$r\,(t) \sim a_1 x(t) + a_2 r(t\text{-}T)$$

mit:

r(t) ..... aktueller Referenzwert,
x(t) ..... aktueller Bildsensorwert,
r(t-T) ... alter Referenzwert,
$a_1$ ..... erster Gewichtungskoeffizient,
$a_2$ ..... zweiter Gewichtungskoeffizient,
t ..... Zeit.

Für die Gewichtungskoeffizienten $a_1$ und $a_2$ gilt:

$$a_1 = \frac{C_1}{(C_1 + C_2)}; \qquad a_2 = \frac{C_2}{(C_1 + C_2)}$$

so daß gilt

$$a_1 + a_2 = 1.$$

Die Gewichtungskoeffizienten $a_1$ und $a_2$ können durch eine Programmierung der Kapazitätswerte der Kondensatoren C1 und C2 verändert werden, indem die Kapazitäten C1 und C2 aus mehreren zusammenschaltbaren Teilkapazitäten zusammengesetzt werden.

Die periphere Auswahlschaltung 304 führt dann die Subtraktion x(t) - r(t-T) und dann die Binärbildung (Schwellenwertvergleich von x(t) - r(t-T)) mit einem von außen einstellbaren Schwellwert S durch.

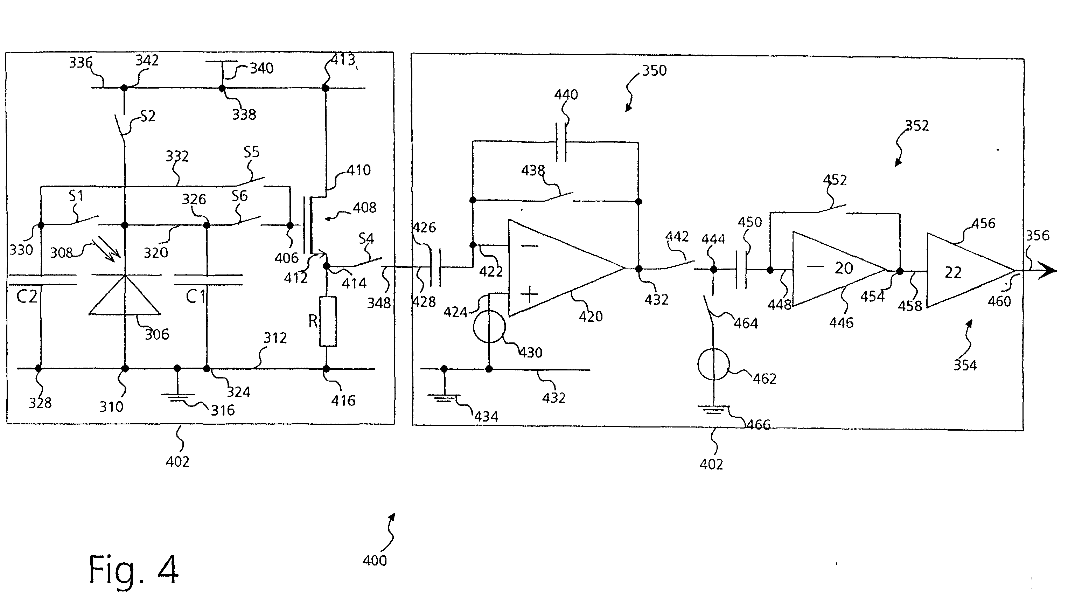

Anhand der Fig. 4 wird nachfolgend ein weiteres Ausführungsbeispiel für die Ausgestaltung der erfindungsgemäßen Vorrichtung näher beschrieben.

Die Vorrichtung ist in ihrer Gesamtheit mit dem Bezugszeichen 400 versehen und umfaßt ein Bildsensorelement 402 sowie eine Ausleseschaltung 404. Die bereits anhand der Fig. 3 beschriebenen Elemente des Bildsensorelements werden in Fig. 4 mit den gleichen Bezugszeichen versehen, und auf eine erneute Beschreibung wird verzichtet.

Anders als bei dem in Fig. 3 dargestellten Beispiel ist der Schalter S3, der eine Umschaltung durchführt, bei dem in Fig. 4 dargestellten Ausführungsbeispiel durch zwei einzelne Schalter, nämlich einen fünften Schalter S5, welcher die Leitung 332 mit einem zwölften Knoten 406 verbindet, und durch einen sechsten Schalter S6, welcher die Leitung 320 mit dem zwölften Knoten 406 verbindet, gebildet. Zusätzlich ist ein Sourcefolger 408 vorgesehen, dessen Gateanschluß mit dem zwölften Knoten 406 verbunden ist. Der Drainanschluß 410 des Sourcefolgers 408 ist über einen dreizehnten Knoten 413 mit der Leitung 336 verbunden. Der Sourceanschluß 412 des Transistors 408 ist mit einem vierzehnten Knoten 414 verbunden, welcher über einen Widerstand R und einen fünfzehnten Knoten 416 mit der Leitung 312 verbunden ist. Der Schalter S4 dient dazu, den Ausgang 348 des Bildsensorelements 402 mit dem vierzehnten Knoten 414 zu verbinden.

Bei dem in Fig. 4 dargestellten Ausführungsbeispiel ist das Photosensorelement 306 durch eine Photodiode gebildet. Der erste, zweite und dritte Schalter sind durch MOS-Schalter gebildet, und der fünfte und der sechste Schalter, die zusammen einen Umschalter bilden sind ebenfalls MOS-Schalter. Die Kapazität des Kondensators C1 ist durch die Sperrschichtkapazität der Raumladungszone der Photodiode 306 gebildet, und die Kapazität des Kondensators C2 ist durch die Schichtfolge Polysilizium-SiO$_2$-Si gebildet.

Die Ausleseschaltung 404 umfaßt den bereits in Fig. 3 dargestellten Subtrahierer 350, der einen Operationsverstärker 420 mit einem invertierenden Eingang 422 und einem nicht-invertierenden Eingang 424 umfaßt. Der invertierende Eingang 422 des Operationsverstärkers 420 ist über eine Eingangskapazität 426 mit einem Eingang 428 der Ausleseschaltung verbunden, die ihrerseits mit dem Ausgang 348 des Bildsensorelements 402 in Verbindung ist. Der nicht-invertierende Eingang 424 des Operationsverstärkers 420 ist mit einem Anschluß einer Referenzspannungsquelle 430 verbunden, deren anderer Anschluß über eine Leitung 432 mit Masse 434 verbunden ist. Zwischen dem invertierenden Eingang 422 des Operationsverstärkers und einem Ausgang 436 des Operationsverstärkers ist ein Rückkopplungsschalter 438 und parallel dazu eine Rückkopplungskapazität 440 geschaltet.

Der Ausgang 432 des Operationsverstärkers ist über einen Schalter 442 mit einem Knoten 444 verbunden. Der Schwellwertbilder 352 umfaßt einen Invertierer 446, dessen Eingang 448 mit einem Anschluß einer Eingangskapazität 450 verbunden ist. Der andere Anschluß der Eingangskapazität 450 ist mit dem Knoten 444 verbunden. Der Eingang 448 des Invertierers 446 ist über einen Schalter 452 mit einem Ausgang 454 des Invertierers verbunden.

Der IC-Ausgang 354 umfaßt einen digitalen Puffer 456, dessen Eingang 458 mit dem Ausgang 454 des Invertierers 446 verbunden ist. Der Ausgang 460 des Puffers 456 ist mit dem Ausgang 356 der Ausleseschaltung 404 verbunden.

Eine Spannungsquelle 462 ist über einen Schalter 464 mit dem Knoten 444 verbunden. Der andere Anschluß der Spannungsquelle 462 ist mit einem Masseanschluß 466 verbunden.

Der Subtrahierer 350 ist ein SC-Subtrahierer und besteht aus dem Operationsverstärker 420, der Referenzspannungsquelle 430 zur Arbeitspunkteinstellung des Operationsverstärkers 420, aus der Eingangskapazität 426, dem Rückkopplungsschalter 438 sowie der Rückkopplungskapazität 440.

Der Schwellwertvergleicher 352 umfaßt einen SC-Komparator, der aus der Eingangskapazität 450, den MOS-Schaltern 442 und 464, dem Invertierer 446 und dem Rückkopplungsschalter 452 besteht. Der Schwellwert S wird über die Spannungsquelle 462 eingestellt.

Der IC-Ausgang 354 umfaßt einen Treiber, welcher den digitalen Puffer 456 umfaßt, wobei der Ausgang 356 der Ausleseschaltung den Chipausgang darstellt.

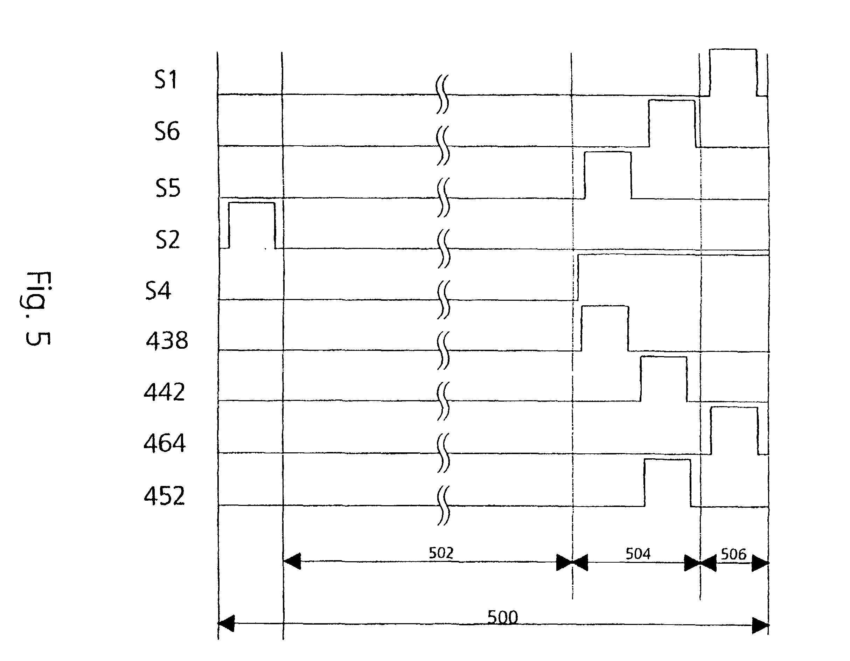

Das in Fig. 5 dargestellte Taktdiagramm der in Fig. 4 dargestellten Schalter stellt den Zeitverlauf bei einem konkreten Ausführungsbeispiel näher dar.

Zu Beginn eines Zeitraums 500 wird das Potential an dem Kondensator C1 über den Schalter S2 auf das Rücksetzpotential 340 gesetzt. Der Zeitraum 502 ist die Integrationszeit, also derjenige Zeitraum, innerhalb dessen das Potential an dem Kondensator C1 proportional zur auf dem Photosensor 306 einfallenden Lichtleistung absinken kann. Dieser Zeitraum kann beispielsweise bei einem zweidimensionalen Array genutzt werden, indem auf andere Bildsensorelemente des Arrays zugegriffen wird, da der Schalter S4 nicht durchgeschaltet ist. Innerhalb des Zeitraums 504 findet die Differenzbildung zwischen r(t-T) und x(t) statt. Zu Beginn des Zeitraums 504 wird der zuvor erzeugte Referenzwert r(t-T) über die Schalter S5 und S4 ausgelesen und auf der Kapazität 426 gespeichert. Der Schalter 438 ist ebenfalls geschlossen, um den Operationsverstärker 420 in seinen Arbeitspunkt zu bringen. In der zweiten Hälfte des Zeitraums 504 wird x(t) über die Schalter S6 und S4 ausgelesen und der Differenzwert auf der Kapazität 440 gespeichert, indem der Schalter 438 geöffnet wird. Der Differenzwert liegt am Ausgang 432 des Operationsverstärkers 420 an. Der Differenzwert wird über den Schalter 442 auf der Kapazität 450 gespeichert, indem der Invertierer 446 über den Schalter 452 voll zurückgekoppelt wird. Im Zeitraum 506 findet der eigentliche Schwellwertvergleich, also die Binarisierung statt. Der Schalter 442 wird geöffnet, und über dem Schalter 464 liegt nun die Spannung von der Spannungsquelle 462 für den Schwellwertvergleich an. Der Schalter 452 wird geöffnet, und der Invertierer 446 arbeitet als Komparator. Das binäre Ergebnis des Schwellwertvergleichs kann nun über den digitalen Puffer 456 an den Ausgang 356 des IC gelangen. Für die Auslese und die Binarisierung des gesamten Arrays, also eines kompletten Bildes wird der Zeitraum 500 benötigt. Im Normalfall entspricht T also dem Zeitraum 500.

Zusätzlich wird im Zeitraum 506, zu dem die Schalter S2, S5 und S6 geöffnet sind, der Schalter S1 geschlossen, um so die bereits oben beschriebene Bildung des neuen Referenzwertes durch einen Ausgleich der Potentiale auf den Kondensatoren C1 und C2 herbeizuführen.

**Patentansprüche**

1. Verfahren zum Erfassen einer Veränderung zwischen Pixelsignalen aus zeitlich aufeinanderfolgenden Pixelsignalen, mit folgenden Schritten:

   - Erfassen eines Pixelsignals (x(t));

- Bilden einer Differenz zwischen dem erfaßten Pixelsignal (x(t)) und einem Referenzsignal (r(t)), wobei das Referenzsignal (r(t)) ein zeitrekursives Signal ist, das aus zumindest zwei, dem erfaßten Pixelsignal (x(t)) vorhergehenden Pixelsignalen bestimmt wird; und
- abhängig von der Differenz, Bestimmen, ob eine Veränderung des erfaßten Pixelsignals (x(t)) gegenüber einem vorhergehenden Pixelsignal vorliegt;

**dadurch gekennzeichnet,**
**daß** die zumindest zwei, dem erfaßten Pixelsignal vorhergehenden Pixelsignale jeweils mit einer vorbestimmten Gewichtung ($a_1$, $a_2$) derart gewichtet werden, daß die Pixelsignale, die dem erfaßten Pixelsignal zeitlich näher sind, stärker gewichtet werden als die Pixelsignale, die von dem erfaßten Pixelsignal zeitlich weiter entfernt sind.

2. Verfahren nach Anspruch 1, **dadurch gekennzeichnet,**
   **daß** der Schritt des Bestimmens eine Schwellwertbildung umfaßt.

3. Verfahren nach Anspruch 1 oder 2, **dadurch gekennzeichnet,**
   **daß** die zeitrekursive Bestimmung des Referenzsignals (r(t)) gemäß der folgenden Gleichung erfolgt:

$$r(t) \; = \; a_1 \cdot \sum_{i=1}^{M_o} a_2^{i-1} \cdot x\big((n-i) \cdot T\big)$$

mit:

r(t) ... zeitrekursives Referenzsignal,
x(t) ... aktuelles Pixelsignal,
a1 ..... erster Gewichtungskoeffizient,
a2 ..... zweiter Gewichtungskoeffizient,
n ..... 0, 1, 2, ... $\infty$
T ..... 1/Erfassungsrate des Pixelsignals,
t ..... Zeit,
$M_u$ ..... Abtastzeitpunkt an einer unteren Grenze des Erfassungsvorgangs,
$M_o$ ..... Abtastzeitpunkt an einer oberen Grenze des Erfassungsvorgangs, und

**daß** die Bildung der Differenz gemäß der folgenden Gleichung erfolgt:

$$d(n \cdot T) = x(n \cdot T) - a_1 \cdot \sum_{i=1}^{M_o} a_2^{i-1} \cdot x\big((n-i) \cdot T\big)$$

$$a_1 + a_2 = 1$$

mit: d(t) = Differenzsignal.

4. Verfahren nach Anspruch 3, **dadurch gekennzeichnet,**
   **daß** die Schwellwertbildung gemäß der folgenden Gleichung erfolgt:

$$b(n \cdot T) = \begin{cases} 1 \ \text{für} \ d(n \cdot T) \geq S \\ 0 \ \text{sonst} \end{cases} \ \text{mit} \ n \in \{M_u + 1, \ldots, 1, \ldots, M_o\}$$

mit:

b(t) ... Binärsignal,
S ..... Schwellwert.

**5.** Verfahren nach einem der Ansprüche 1 bis 4, **dadurch gekennzeichnet,**
**daß** die Pixelsignale aufgrund einer auf ein Sensorelement (306) einfallenden Strahlungsleistung erzeugt werden,
und einen Helligkeitswert darstellen.

**6.** Verfahren nach Anspruch 5, **dadurch gekennzeichnet,**
**daß** das Sensorelement (306) eine Mehrzahl von Pixeln aufweist, um eine Mehrzahl von Pixelsignalen zu erfassen,
die ein Bild darstellen.

**7.** Vorrichtung zum Erfassen einer Veränderung zwischen Pixelsignalen und zeitlich aufeinanderfolgenden Pixelsignalen, mit:

einem Sensorelement (306), das abhängig von einer darauf einfallenden Strahlungsleistung (308) ein Pixelsignal (x(t)) erzeugt;
einem Subtrahierer (350), der eine Differenz zwischen dem von dem Sensorelement (306) erzeugten Pixelsignal (x(t)) und einem gespeicherten Referenzsignal (r(t)) erzeugt, wobei das Referenzsignal (r(t)) ein zeitrekursives Signal ist, das aus zumindest zwei, dem erfaßten Pixelsignal (x(t)) vorhergehenden Pixelsignalen
bestimmt wird; und
einer Beurteilungseinrichtung (352), die abhängig von der erzeugten Differenz beurteilt, ob eine Veränderung
des erzeugten Pixelsignals (x(t)) gegenüber vorhergehenden Pixelsignalen vorliegt;

**dadurch gekennzeichnet,**
**daß** eine Einrichtung vorgesehen ist, um die zumindest zwei, dem erfaßten Pixelsignal vorhergehenden Pixelsignale jeweils mit einer vorbestimmten Gewichtung ($a_1$, $a_2$) derart zu gewichten, daß die Pixelsignale, die dem
erfaßten Pixelsignal zeitlich näher sind, stärker gewichtet werden als die Pixelsignale, die von dem erfaßten Pixelsignal zeitlich weiter entfernt sind.

**8.** Vorrichtung nach Anspruch 7, **dadurch gekennzeichnet,**
**daß** das Sensorelement (306) ein photosensitives Element ist.

**9.** Vorrichtung nach Anspruch 7 oder 8, **gekennzeichnet durch**

einen ersten Kondensator (C2), der das Referenzsignal (r(t)) speichert; und

einen zweiten Kondensator (C1), der das Pixelsignal (x(t)) speichert;

wobei nach dem Auslesen des Referenzsignals und des Pixelsignals die in beiden Kondensatoren (C2, C1)
gespeicherten Ladungen auf beide Kondensatoren verteilt werden, um ein neues Referenzsignal gemäß folgender Gleichung zu erzeugen:

$$r(t) \sim a_1 x(t) + a_2 r(t-T)$$

mit:

r(t) ..... aktueller Referenzwert,
x(t) ..... aktueller Bildsensorwert,
r(t-T) ... alter Referenzwert,
$a_1$ ..... erster Gewichtungskoeffizient,
$a_2$ ..... zweiter Gewichtungskoeffizient,
T ..... 1/Erfassungszeit.

**10.** Vorrichtung nach Anspruch 9, **dadurch gekennzeichnet,**
**daß** die Kondensatoren (C2, C1) parallel verschaltet sind und für die Gewichtungskoeffizienten folgende Gleichung gilt:

$$a_1 = \frac{C_1}{(C_1 + C_2)}; \qquad a_2 = \frac{C_2}{(C_1 + C_2)}$$

## Claims

1.  A method of detecting a change between pixel signals which chronologically follow one another, said method comprising the steps of:

    -   detecting a pixel signal (x(t));
    -   forming a difference between the detected pixel signal (x(t)) and a reference signal (r(t)), said reference signal (r(t)) being a time-recursive signal determined on the basis of at least two pixel signals preceding the detected pixel signal (x(t)); and
    -   determining, in dependence upon said difference, whether there is a change of the detected pixel signal (x(t)) in comparison with a preceding pixel signal;

    **characterized in**
    **that** the at least two pixel signals preceding the detected pixel signal are each weighted with a predetermined weighting ($a_1$, $a_2$) in such a way that the pixel signals which are temporally closer to the detected pixel signal are weighted more strongly than the pixel signals which are temporally more remote from the detected pixel signal.

2.  A method according to one claim 1, **characterized in**
    **that** the determination step comprises the formation of a threshold value.

3.  A method according to claim 1 or 2, **characterized in**
    **that** the time-recursive determination of the reference signal (r(t)) is carried out in accordance with the following equation:

$$r(t) \;=\; a_1 \cdot \sum_{i=1}^{M_v} a_2^{i-1} \cdot x\big((n-i)\cdot T\big)$$

wherein:

r(t) ... time-recursive reference signal,
x(t) ... current pixel signal,
$a_1$ ..... first weighting coefficient,
$a_2$ ..... second weighting coefficient,
n ..... 0, 1, 2, ... $\infty$,
T ..... 1/detection rate of the pixel signal,
t ..... time,

$M_u$ ..... sampling time at a lower limit of the detection process,
$M_o$ ..... sampling time at an upper limit of the detection process, and

**that** the difference is formed according to the following equation:

$$d(n \cdot T) = x(n \cdot T) - a_1 \cdot \sum_{i=1}^{M_v} a_2^{i-1} \cdot x\big((n-i) \cdot T\big)$$

$$a_1 + a_2 = 1$$

wherein: d(t) = differential signal.

4. A method according to claim 3, **characterized in**
   **that** the threshold value is formed according to the following equation:

$$b(n \cdot T) = \begin{cases} 1 \ \textit{for} \ d(n \cdot T) \geq S \\ 0 \ \textit{otherwise} \end{cases} \text{ wherein } n \in \{M_u + 1, .., 1.., M_o\}$$

wherein:

b(t) ... binary signal,
S ..... threshold value.

5. A method according to one of the claims 1 to 4, **characterized in**
   **that** the pixel signals are produced on the basis of a radiation power incident on a sensor element (306) and that they represent a brigthness value.

6. A method according to claim 5, **characterized in that** the sensor element (306) comprises a plurality of pixels so as to detect a plurality of pixel signals representing an image.

7. A device for detecting a change between pixel signals which chronologically follow one another, said device comprising:

   a sensor element (306) producing a pixel signal (x(t)) in dependence upon a radiation power (308) incident thereon;

   a subtracter (350) forming a difference between the pixel signal (x(t)) produced by the sensor element (306) and a stored reference signal (r(t)), said reference signal (r(t)) being a time-recursive signal determined on the basis of at least two pixel signals preceding the detected pixel signal (x(t)); and

   a judging means (352) judging in dependence upon the difference formed whether there is a change of the pixel signal produced (x(t)) in comparison with preceding pixel signals;

   **characterized in**
   **that** a means is provided to weight the at least two pixel signals preceding the detected pixel signal with a predetermined weighting ($a_1$, $a_2$) in such a way that the pixel signals which are temporally closer to the detected pixel signal are weighted more strongly than the pixel signals which are temporally more remote from the detected pixel signal.

8.  A device according to claim 7, **characterized in that** the sensor element (306) is a photosensitive element.

9.  A device according to claim 7 or 8, **characterized by**

    a first capacitor (C2) which stores the reference signal (r(t)); and

    a second capacitor (C1) which stores the pixel signal (x(t));

    wherein after the reading of the reference signal and of the pixel signal the charges stored in both capacitors (C2, C1) are distributed over both capacitors so as to produce a new reference signal according to the following equation:

    $$r(t) \sim a_1 x(t) + a_2 r(t\text{-}T)$$

    wherein:

    r(t) ..... current reference value
    x(t) ..... current image sensor value
    r(t-T) ... old reference value
    $a_1$ ..... first weighting coefficient
    $a_2$ ..... second weighting coefficient
    T ..... 1/detection time.

10. A device according to claim 9, **characterized in that** the capacitors (C2, C1) are connected in parallel and that the following equation holds true for the weighting coefficients:

    $$a_1 = \frac{C_1}{(C_1 + C_2)} \; ; \qquad a_2 = \frac{C_2}{(C_1 + C_2)}$$

**Revendications**

1.  Procédé pour détecter une modification entre des signaux de pixels à partir de signaux de pixels se succédant dans le temps, aux étapes consistant à :

    - capter un signal de pixels (x(t)) ;
    - former une différence entre le signal de pixels (x(t)) capté et un signal de référence (r(t)), le signal de référence (r(t)) étant un signal se reproduisant dans le temps, lequel est déterminé à partir d'au moins deux signaux de pixels précédant le signal de pixels capté (x(t)) ; et
    - en fonction de la différence, déterminer s'il y a une modification du signal de pixels (x(t)) capté par rapport à un signal de pixel précédent ;

    **caractérisé par le fait que** chacun des au moins deux signaux de pixels précédant le signal de pixels capté est pondéré par une pondération prédéterminée ($a_1$, $a_2$) de telle sorte que les signaux de pixels se rapprochant le plus dans le temps du signal de pixels capté soient pondérés plus fortement que les signaux de pixels plus éloignés dans le temps du signal de pixels capté.

2.  Procédé selon la revendication 1, **caractérisé par le fait que** l'étape de détermination comprend une formation de valeur de seuil.

3.  Procédé selon la revendication 1 ou 2, **caractérisé par le fait que** la détermination se répétant dans le temps du signal de référence (r(t)) s'effectue selon l'équation suivante :

$$r(t) = a_1 \cdot \sum_{i=1}^{M_u} a_2^{i-1} \cdot x\big((n-i) \cdot T\big)$$

avec : r(t) ..... signal de référence se répétant dans le temps,
x (t) ... signal de pixels actuel,
$a_1$ ..... premier coefficient de pondération,
$a_2$ ..... second coefficient de pondération,
n ....... 0, 1, 2, ... $\infty$
T ..... l/taux de détection du signal de pixels
t ..... temps,
$M_u$ ... moment de balayage à une limite inférieure de l'opération de détection,
$M_o$ ... moment de balayage à une limite supérieure de l'opération de détection, et

que la formation de la différence s'effectue selon l'équation suivante :

$$d(n \cdot T) = x(n \cdot T) - a_1 \cdot \sum_{i=1}^{M_u} a_2^{i-1} \cdot x\big((n-i) \cdot T\big)$$

$$a_1 + a_2 = 1$$

avec : d(t) = signal de différence.

**4.** Procédé selon la revendication 3, **caractérisé par le fait que** la formation de la valeur de seuil s'effectue selon l'équation suivante :

$$b(n \cdot T) = \begin{cases} 1 & pour \quad d(n \cdot T) \geq S \\ 0 & sinon \end{cases} \quad avec \quad n \in \{M_u + 1, \ldots, 1, \ldots, M_o\}$$

avec :

b(t) ... signal binaire,
s ...... valeur de seuil.

**5.** Procédé selon l'une des revendications 1 à 4, **caractérisé par le fait que** les signaux de pixels sont générés sur base d'une puissance de rayonnement incident sur un élément capteur (306) et représentent une valeur de luminosité.

**6.** Procédé selon la revendication 5, **caractérisé par le fait que** l'élément capteur (306) présente une pluralité de pixels, en vue de saisir une pluralité de signaux de pixels représentant une image.

**7.** Dispositif pour détecter une modification entre des signaux de pixels et des signaux de pixels se succédant dans le temps, avec :

un élément capteur (306) générant un signal de pixels (x(t)) dépendant d'une puissance de rayonnement (308) incident sur celui-ci ;
un dispositif de soustraction (350) générant une différence entre le signal de pixels (x(t)) généré par l'élément capteur (306), le signal de référence (r(t)) étant un signal se reproduisant dans le temps, lequel est déterminé à partir d'au moins deux signaux de pixels précédant le signal de pixels capté (x(t)) ; et

un dispositif d'évaluation (352) qui évalue, en fonction de la différence générée, s'il y a une modification du signal de pixels (x(t)) généré par rapport aux signaux de pixels précédents ;

**caractérisé par le fait qu'**il est prévu un dispositif pondérant chacun d'au moins deux signaux de pixels précédant le signal de pixels capté par une pondération prédéterminée ($a_1$, $a_2$) de telle sorte que les signaux de pixels se rapprochant le plus dans le temps du signal de pixels capté soient pondérés plus fortement que les signaux de pixels plus éloignés dans le temps du signal de pixels capté.

8. Dispositif selon la revendication 7, **caractérisé par le fait que** l'élément capteur (306) est un élément photosensible.

9. Dispositif selon la revendication 7 ou 8, **caractérisé par**

un premier condensateur (C2) mémorisant le signal de référence (r(t)) ; et
un second condensateur (C1) mémorisant le signal de pixels (x(t)) ;
les charges mémorisées dans les deux condensateurs (C2, C1) étant, après lecture du signal de référence et du signal de pixels, réparties sur les deux condensateurs, afin de générer un nouveau signal de référence selon l'équation suivante :

$$r(t) \sim a_1 x(t) + a_2 r(t-T)$$

avec :

r(t) ..... valeur de référence actuelle,
x(t) ...... valeur de capteur d'image actuelle,
r(t-T) ... valeur de référence ancienne,
$a_1$ ..... premier coefficient de pondération,
$a_2$ ..... second coefficient de pondération,
T ..... 1/temps de détection.

10. Dispositif selon la revendication 9, **caractérisé par le fait que** les condensateurs (C2, C1) sont connectés en parallèle et que pour les coefficients de pondération est d'application l'équation suivante :

$$a_1 = \frac{C_1}{(C_1 + C_2)} \; ; \qquad a_2 = \frac{C_2}{(C_1 + C_2)}$$

Fig. 1

Fig. 2

Fig. 3

Fig. 4

18

Fig. 5

Fig. 6

EP 1 002 423 B1